# EUROPEAN PATENT APPLICATION

(11) **EP 2 407 343 A1**
(43) Date of publication of application: **18.01.2012**
(21) Application number: 10750858.2
(22) Date of filing: 10.03.2010
(51) Int. Cl.: B60N 2/48

(54) **DEVICE FOR ADJUSTING POSITION OF HEADREST AND METHOD FOR ADJUSTING POSITION OF HEADREST**

(30) Priority: 10.03.2009 JP 2009055937; 10.03.2009 JP 2009056282
(71) Applicant: FUJIKURA LTD., Tokyo 135-8512 (JP)
(72) Inventor: YAMAGUCHI, Yuichiro, Sakura-shi Chiba 285-8550 (JP); NOGUCHI, Yuki, Sakura-shi Chiba 285-8550 (JP); OSAKI, Takuya, Sakura-shi Chiba 285-8550 (JP); SAKURAI, Ryohei, Sakura-shi Chiba 285-8550 (JP)
(74) Representative: Grünecker, Kinkeldey, Stockmair & Schwanhäusser
(86) International application number: PCT/JP2010/053970
(87) International publication number: WO 2010/104105

(57) **Abstract**

To automatically adjust a position of a headrest accurately by preventing an unnecessary movement of the headrest, a headrest position adjusting device includes a sensing electrode 1 and a detecting circuit 2 embedded in a headrest 13 provided on a seat 10, an arithmetic circuit 5, a headrest driving motor 3, and a motor control circuit 4. The arithmetic circuit 5 calculates the distance between the head 22 of an occupant 21 and the headrest 13 and an amount of change of a capacitance based on a capacitance value from the detecting circuit 2. The motor control circuit 4 controls the headrest driving motor 3 in accordance with the calculation results to adjust the position of the headrest 13. When a vehicle signal from a vehicle signal output unit 6 is a specific signal or when the amount of change of the capacitance per a predetermined time is larger than a certain threshold, the arithmetic circuit 5 outputs to the motor control circuit 4 a calculation result for suspending the position adjusting operation for the headrest 13.

## Description

### Technical Field

The present invention relates to a headrest position adjusting device and a headrest position adjusting method for adjusting a position of a headrest for use in a vehicle such as an automobile, etc.

### Background Art

The following headrest adjusting device is known as a technique for adjusting the front-rear position of a headrest of a vehicle to an appropriate position without giving discomfort to a vehicle occupant (passenger). That is, this device includes a capacitance-type sensor for contactlessly sensing the position of the head of the vehicle occupant by means of a sensing electrode provided on a head abutting surface of the headrest, and adjusts the front-rear position of the headrest based on an output (a sensing result) of the capacitance-type sensor (see Patent Document 1 (pp. 4-5, Fig. 1)).

This headrest position adjusting device includes a capacitance-type sensor for sensing the distance between the headrest and the head, a headrest driving motor for driving the headrest in the direction to come close to or go away from the head, and a control unit for controlling the driving of the headrest driving motor based on an output of the capacitance-type sensor. This device adjusts the headrest to an appropriate position such that the distance between the headrest and the head becomes fixed.

Further, the following headrest adjusting device is known as a technique for adjusting the up-down position of a headrest of a vehicle accurately to the position of the head of a vehicle occupant (a person sitting on a seat). That is, this device includes a capacitance-type sensor for contactlessly sensing the position of the head of the vehicle occupant by means of a sensing electrode provided on a head abutting surface of the headrest, and adjusts the up-down position of the headrest based on an output (a sensing result) of the capacitance-type sensor (see Patent Document 2 (pp. 4-5, Fig. 2)).

This headrest adjusting device includes a capacitance-type sensor for sensing the height position of the head of the vehicle occupant, a headrest driving motor for driving the headrest provided on top of a seat back (a backrest) in a direction to come close to or go away from the seat back, and a control unit for controlling the driving of the headrest driving motor based on an output of the capacitance-type sensor. The device adjusts the height of the headrest in accordance with the position of the head of the vehicle occupant. The device starts the operation of adjusting the headrest when the device senses that an ignition switch becomes electrically conductive, a sitting sensor senses that a person sits down, and a seatbelt buckle switch senses that a seatbelt of the vehicle is fastened.

### Prior Art Document

### Patent Document

Patent Document 1: JP2006-218083A
Patent Document 2: JPH11-180200A

### Disclosure of Invention

### Problem to be Solved by the Invention

However, the headrest position adjusting devices disclosed in Patent Document 1 and Patent Document 2 identified above have a problem that if the devices perform the operation of adjusting the position of the headrest when the posture of the vehicle occupant sitting on the seat is not stable, the devices have difficulty adjusting the headrest to an appropriate position (in the front-rear direction, in the up-down direction, and in the left-right direction). Furthermore, adjustment of the headrest, if it ends up moving the headrest to an inappropriate position, is a waste of the movement of the headrest, which might give discomfort to the vehicle occupant.

To solve the problems of the conventional art described above, an object of the present invention is to provide a headrest position adjusting device and a headrest position adjusting method which are, with a simple configuration, capable of automatically adjusting the position of a headrest accurately by, in particular, preventing an unnecessary movement of the headrest.

### Means for Solving the Problem

To solve the problems described above and achieve the object, a headrest position adjusting device according to the present invention includes: at least one sensing electrode provided in a headrest provided on a seat of a vehicle for sensing a capacitance between the head of a human body sitting on the seat and the headrest; a detecting circuit which detects a capacitance value based on the capacitance from the sensing electrode; vehicle signal output means which outputs a vehicle signal regarding at least one of an operation to the vehicle and a state of the seat; and position adjusting means which receives the vehicle signal output by the vehicle signal output means, calculates the distance between the head and the headrest and an amount of change of the capacitance based on the capacitance value detected by the detecting circuit, and in accordance with the calculation results, adjusts the position of the headrest by moving the headrest to an appropriate position based on the distance and the position of the head, wherein the position adjusting means suspends moving the headrest for a predetermined time, when one of the following cases occurs: a case when the vehicle signal output by the vehicle signal output means is a specific signal indicating a specific state; and a case when the vehicle signal indicates that the amount of change, per a predetermined time, of the capacitance from the detecting circuit is larger than a certain threshold.

A headrest position adjusting method according to the present invention is a headrest position adjusting method for adjusting the position of a headrest provided on a seat of a vehicle by moving the headrest to an appropriate position in accordance with the distance between a head and the headrest and the position of the head based on a capacitance value which is based on a capacitance from at least one sensing electrode provided in the headrest and a vehicle signal regarding at least one of an operation to the vehicle and a state of the seat. The method includes: a calculating step of calculating based on the capacitance value, the distance between the head of a human body sitting on the seat and the headrest and an amount of change of the capacitance; a judging step of judging based on the vehicle signal whether or not the vehicle signal is a specific signal indicating a specific state; a controlling step of controlling moving of the headrest in accordance with the calculation results of the calculating step and the judgment result of the judging step, wherein the controlling step executes a control of suspending moving the headrest for a predetermined time, when one of the following cases occurs: a case when the judgment result of the judging step indicates that the vehicle signal is a specific signal; and a case when the calculation result of the calculating step indicates that the amount of change, per a predetermined time, of the capacitance from a detecting circuit is larger than a certain threshold.

For example, when one of the cases for suspending moving the headrest for the predetermined time occurs, after the predetermined time has passed, the position adjusting means may again move the headrest to the appropriate position in accordance with the calculation results.

For example, the specific signal may be any one of an instruction operation signal regarding a left or right turn of the vehicle, an operation signal to an instrument panel of the vehicle, an operation signal to a vehicle-mounted device mounted on the vehicle, an instruction operation signal regarding a brake of the vehicle, a reversing instruction operation signal to a shift lever of the vehicle, a parking instruction operation signal to the shift lever of the vehicle, a signal regarding opening/closing of a door of the vehicle, an operation signal to a console box of the vehicle, an operation signal to a glove compartment of the vehicle, and a signal regarding presence or absence of sitting of a human body on the seat.

For example, when one of the cases for suspending moving the headrest for the predetermined time occurs, after the predetermined time has passed, the controlling step may execute a control of again moving the headrest to the appropriate position in accordance with the calculation results.

A headrest position adjusting device according to the present invention includes: at least one sensing electrode provided in a headrest provided on a seat of a vehicle for sensing a capacitance between the head of a human body sitting on the seat and the headrest; a detecting circuit which detects a capacitance value based on the capacitance from the sensing electrode; vehicle signal output means which outputs at least a vehicle speed signal regarding the speed of the vehicle as a vehicle signal; and position adjusting means which receives the vehicle signal output by the vehicle signal output means, calculates the distance between the head and the headrest and an amount of change of the capacitance based on the capacitance value detected by the detecting circuit, and in accordance with the calculation results, adjusts the position of the headrest by moving the headrest to an appropriate position based on the distance and the position of the head, wherein the position adjusting means starts a position adjusting operation by moving the headrest, when the vehicle signal output by the vehicle signal output means indicates at least that the vehicle has come to move forward at a certain speed or higher.

For example, the vehicle signal output means may output a signal indicating presence or absence of sitting on the seat as the vehicle signal. For example, when the seat is other than the driver seat of the vehicle, the position adjusting means may start a position adjusting operation for the headrest on that seat when the vehicle signal additionally indicates that sitting on the seat is present.

For example, the vehicle signal output means may output a signal regarding an ignition switch of the vehicle and a signal indicating fastening/unfastening of a seatbelt sent from a seatbelt buckle of the seat as the vehicle signal. For example, the position adjusting means may start a position adjusting operation for the headrest when the vehicle signal additionally indicates that the ignition switch is ON and that the seatbelt is fastened.

For example, when the amount of change, per a predetermined time, of the capacitance from the detecting circuit is larger than a certain threshold, the position adjusting means may be configured not to start a position adjusting operation for the headrest.

A headrest position adjusting method according to the present invention is a headrest position adjusting method for adjusting the position of a headrest provided on a seat of a vehicle by moving the headrest to an appropriate position in accordance with the distance between a head and the headrest and the position of the head based on a capacitance value which is based on a capacitance from at least one sensing electrode provided in the headrest and a vehicle signal at least as a vehicle speed signal regarding the speed of the vehicle. The method includes: a calculating step of calculating the distance between the head of a human body sitting on the seat and the headrest and an amount of change of the capacitance; a vehicle signal receiving step of receiving the vehicle signal; and a controlling step of controlling moving of the headrest based on the calculation results of the calculating step and the vehicle signal received by the vehicle signal receiving step, wherein the controlling step executes a control of starting a position adjusting operation by moving the headrest, when the vehicle signal received by the vehicle signal receiving step indicates at least that the vehicle has come to move forward at a certain speed or higher.

For example, the vehicle signal receiving step may receive a signal indicating presence or absence of sitting on the seat as the vehicle signal. For example, when the seat is other than the driver seat of the vehicle, the controlling step may execute a control of starting a position adjusting operation for the headrest on that seat when the vehicle signal additionally indicates that sitting on the seat is present.

For example, the vehicle signal receiving step may receive a signal regarding an ignition switch of the vehicle and a signal indicating fastening/unfastening of a seatbelt sent from a seatbelt buckle of the seat as the vehicle signal. For example, the controlling step may execute a control of starting a position adjusting operation for the headrest when the vehicle signal additionally indicates that the ignition switch is ON and that the seatbelt is fastened.

For example, the controlling step may execute a control of refraining from starting a position adjusting operation for the headrest when the calculation result indicates that the amount of change, per a predetermined time, of the capacitance from a detecting circuit is larger than a certain threshold.

### Effect of the Invention

According to the headrest position adjusting device and the headrest position adjusting method according to the present invention, it is possible to automatically adjust the position of the headrest accurately by preventing an unnecessary movement of the headrest. That is, the position adjusting operation for the headrest is not to be performed when the posture of the vehicle occupant sitting on the seat is unstable, enabling to spare an unnecessary movement of the headrest. Then, when the posture of the vehicle occupant has become stable, the position adjusting operation for the headrest is performed, enabling to adjust the headrest to an appropriate position (in the front-rear direction, in the up-down direction, and in the left-right direction).

(1) For example, when an instruction operation signal regarding a left/right turn is output while the vehicle is running, suspending the position adjusting operation for the headrest for a while assures that the headrest will not be moved close to the face of the vehicle occupant even when the vehicle occupant turns his/her face to the left or the right for turning the vehicle to the left or the right, giving no discomfort to the vehicle occupant or causing no driving difficulty.

(2) When an operation signal to a vehicle-mounted device or the like set on the instrument panel or an operation signal to the glove compartment is output while the vehicle is running, suspending the position adjusting operation for the headrest for a while assures that the headrest will not be moved forward even when the vehicle occupant stoops forward for the operation, and hence the vehicle occupant's moving his/her head backward soon after to recover to the original posture is at no risk of the head colliding against the headrest.
(3) When a parking instruction operation signal to the shift lever of the vehicle is output, suspending the position adjusting operation for the headrest for a while prevents the headrest from making a following movement to catch up with the movement of the head of the vehicle occupant while the vehicle is parked, giving no discomfort to the vehicle occupant.

(4) When an instruction operation signal regarding the brake is output while the vehicle is running, suspending the position adjusting operation for the headrest for a while assures that the headrest will not be moved forward in response to the movement of the head of the vehicle occupant even if the head of the vehicle occupant moves forward when the vehicle occupant applies the brake, causing no possibility of the head of the vehicle occupant colliding against the headrest when the vehicle occupant recovers to the original posture.
(5) When a reversing instruction operation signal to the shift lever of the vehicle is output, suspending the headrest for a while assures that the headrest will not be moved in response to the movement of the head of the vehicle occupant even when the vehicle occupant turns to the back for reversing the vehicle, preventing the headrest from interfering within the vision of the vehicle occupant.

(6) When an operation signal to a vehicle-mounted device, an operation signal to the console box, or a signal regarding opening/closing of a window is output, suspending the position adjusting operation for the headrest for a while assures that the headrest will not make a following movement in response to the movement of the head of the vehicle occupant even when the head of the vehicle occupant moves for the operation, giving no discomfort to the vehicle occupant.

(7) When an amount of change, per a predetermined time, of the capacitance between the headrest and the head is larger than a preset certain threshold, suspending the position adjusting operation for the headrest for a while assures that headrest will not be adjusted to an inappropriate position, with position adjustment for the headrest not performed when the posture of the vehicle occupant sitting on the seat is unstable such as when the head of the vehicle occupant is moving continually.
(8) When an operation signal regarding opening/closing of a door of the vehicle or a signal regarding presence or absence of sitting of a human body on the seat is output, suspending the position adjusting operation for the headrest for a while assures that the headrest will not be adjusted to an unpredictable position, with position adjustment for the headrest not performed when the vehicle occupant is sitting at a greatly outlying position.

(9) When the position adjusting operation for the headrest is programmed to start when the vehicle has come to move forward at a certain speed or higher, the position adjusting operation for the headrest is started when the driver's posture has become stable, enabling the headrest to be adjusted to an appropriate position.

### Brief Description of the Drawings

[Figs. 1] Figs. 1 are exemplary diagrams showing a vehicle seat to which a headrest position adjusting device according to a first embodiment of the present invention is applied.
[Fig. 2] Fig. 2 is a block diagram showing an example of an overall configuration of the headrest position adjusting device.
[Fig. 3] Fig. 3 is a flowchart showing an example of procedures of a position adjusting process by a headrest position adjusting method according to the first embodiment of the present invention.
[Figs. 4] Figs. 4 are exemplary diagrams showing a vehicle seat to which a headrest position adjusting device according to a second embodiment of the present invention is applied.
[Fig. 5] Fig. 5 is a flowchart showing an example of procedures of a position adjusting process by a headrest position adjusting method according to the second embodiment of the present invention.

### Best Mode for Carrying Out the Invention

Preferred embodiments of a headrest position adjusting device and a headrest position adjusting method according to the present invention will now be explained in detail with reference to the attached drawings.

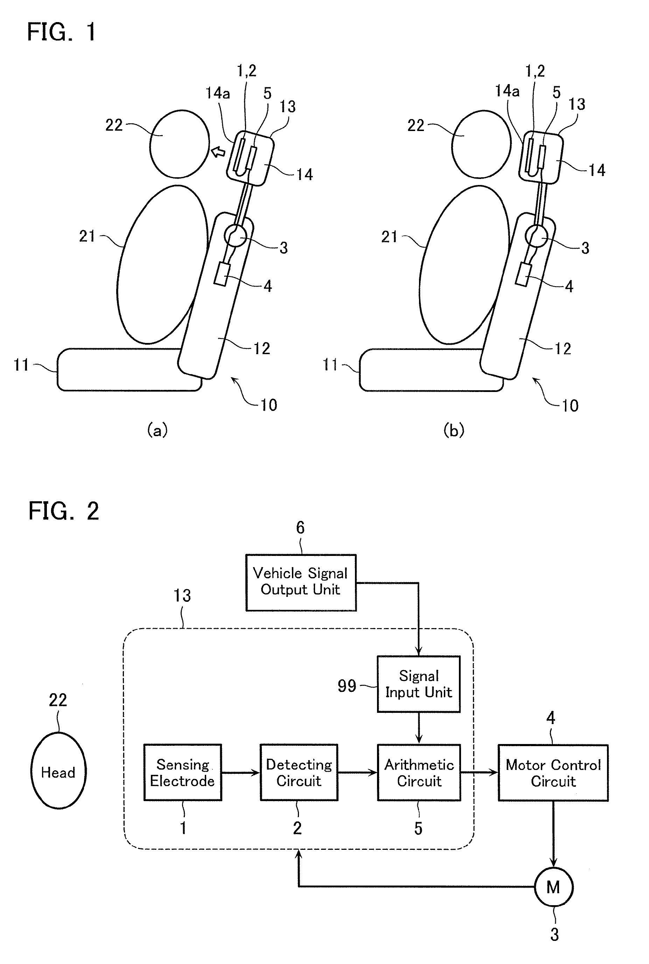

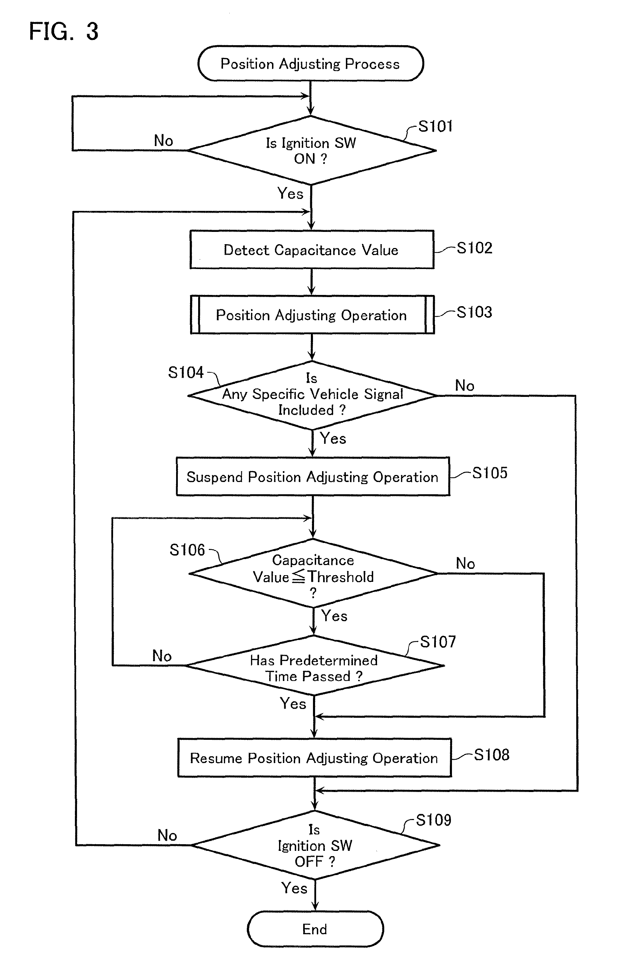

Figs. 1 are exemplary diagrams showing a vehicle seat to which a headrest position adjusting device according to a first embodiment of the present invention is applied. Fig. 2 is a block diagram showing an example of an overall configuration of the headrest position adjusting device. Fig. 3 is a flowchart showing an example of procedures of a position adjusting process by a headrest position adjusting method according to the first embodiment of the present invention.

As shown in Figs. 1(a) and 1(b), a seat 10 is a seat mounted on an unillustrated vehicle, and includes a sitting portion 11 on which an occupant 21 sits, a seat back (backrest) 12 which stands up from the rear surface of the sitting portion 11 to support the back of the occupant 21, and a headrest 13 provided at the top end of the seat back 12.

A headrest driving motor 3 for moving the headrest 13 is embedded in the top end portion of the seat back 12. The headrest 13 is driven by the headrest driving motor 3 to come close to the head 22 of the occupant 21 (in the direction of the outline arrow shown in Fig. 1(a)), or go away therefrom in the opposite direction.

The headrest 13 of the seat 10 may be configured to be driven by the headrest driving motor 3 to move not only to come close to or go away from the head 22 of the occupant 21 as described above but also in the up-down direction and the left-right direction to follow movements of the head 22 in the up-down direction and the left-right direction, though not so illustrated.

The headrest 13 includes: a headrest main body 14 made of a shock-absorbing material (a cushion material) such as urethane, etc. and capable of receiving the head 22 of the occupant 21 on its head abutting surface (or front surface) 14a; a sensing electrode 1 and a detecting circuit 2 which are mounted inside the headrest main body 14 at a portion close to the head abutting surface 14a; and an arithmetic circuit 5 which, based on an output from the detecting circuit 2 and as shown in Fig. 2, based on a signal from a signal input unit 99, judges the content of a vehicle signal which is input to the signal input unit 99 from a vehicle signal output unit 6 and of which content is at least one of an operation to the vehicle and a state of the seat 10, and calculates the distance between the head 22 and the headrest 13 and an amount of change of a capacitance.

Information regarding a calculation result of the arithmetic circuit 5 is output to, for example, a motor control circuit 4 embedded in the seat back 12, and the motor control circuit 4 controls the behavior of the headrest driving motor 3 based on the information regarding the calculation result input thereto. In the present example, the arithmetic circuit 5, the motor control circuit 4, and the headrest driving motor 3 constitute position adjusting means which adjusts the position of the headrest 13 by moving the headrest 13 to an appropriate position.

The sensing electrode 1 and the detecting circuit 2 are formed on the same surface or different surfaces of one substrate unillustrated which is made of, for example, a flexible printed board, a membrane substrate, and a rigid printed board. The sensing electrode 1 is made of a conductive material such as copper, a copper alloy, aluminum, etc. which is patterned on the substrate made of an insulating material such as polyethylene terephthalate (PET), polyethylene naphthalate (PEN), polyamide (PA), polyimide (PI), a glass epoxy resin, etc. At least one sensing electrode 1 is provided in the headrest 13.

In the present example, the arithmetic circuit 5 has been explained as an example that is configured separately from the sensing electrode 1 and the detecting circuit 2. However, the arithmetic circuit 5 may also be provided on the same substrate on which the sensing electrode 1 and the detecting circuit 2 are formed. Likewise, the motor control circuit 4 may be embedded in the headrest 13 and provided on the same substrate.

In the headrest position adjusting device configured as described above, first, the sensing electrode 1 embedded in the headrest 13 senses a capacitance between the head 22 of the occupant 21 and the headrest 13 as shown in Fig. 2. A signal indicating the capacitance sensed by the sensing electrode 1 is input to the detecting circuit 2, which then converts the signal to a voltage value and outputs it as a capacitance value.

The arithmetic circuit 5 calculates the distance between the head 22 and the headrest 13 and an amount of change of the capacitance based on the capacitance value output by the detecting circuit 2, and in a position adjusting operation, outputs to the motor control circuit 4, a calculation result which will make the distance between the head 22 and the headrest 13 fixed (i.e., make the capacitance between the head 22 and the headrest 13 a fixed value). In accordance with this calculation result, the motor control circuit 4 outputs a control signal for controlling the driving of the headrest driving motor 3 to the headrest driving motor 3.

The arithmetic circuit 5 receives a vehicle signal input to the signal input unit 99 from the vehicle signal output unit 6, judges the content of the vehicle signal, and outputs to the motor control circuit 4, a calculation result for suspending a position adjusting operation for the headrest 13 for a predetermined time (for example, 3 seconds) when the vehicle signal is a specific signal indicating a specific state or when the vehicle signal indicates that an amount of change, per a predetermined time, of the capacitance from the detecting circuit 2 (for example, an amount of change ΔC per 1 second) is larger than a certain threshold (Δth/Δt).

The vehicle signal output unit 6 outputs to the signal input unit 99, a vehicle signal that is output from a vehicle-mounted device directly, or via an ECU, or via a communication unit, etc. The signal input unit 99 receives the vehicle signal (an electric signal, a frequency signal, etc.) from the vehicle signal output unit 6, converts it to a form processable by the arithmetic circuit 5, and then outputs the vehicle signal to the arithmetic circuit 5.

In the present example, the detecting circuit 2 includes a C-V converting circuit (a capacitance-voltage converting circuit), an A/D converting circuit, etc., and the arithmetic circuit 5 and the motor control circuit 4 include a CPU, a RAM, a ROM, etc. The vehicle signal output unit 6 comprises an ECU (electronic control unit) or the like, and outputs, particularly, the vehicle signal regarding an operation to the vehicle or a state of the seat 10 to the arithmetic circuit 5.

Specifically, the vehicle signal includes various signals regarding the vehicle (a signal regarding an operation to the vehicle, a signal regarding a behavior of the vehicle, a signal regarding the state of the vehicle, etc.). The arithmetic circuit 5 judges whether the vehicle signal is the specific signal mentioned above or not. Here, the specific signal is any of the following signals, for example.

That is, the specific signal is any one of an instruction operation signal regarding a left or right turn of the vehicle (a blinker operation signal), an operation signal to an instrument panel of the vehicle (an instrument panel operation signal), an operation signal to a vehicle-mounted device mounted on the vehicle (for example, a car navigation system, etc.) (a vehicle-mounted device operation signal), an instruction operation signal regarding a brake of the vehicle (a brake operation signal), a reversing instruction operation signal to a shift lever of the vehicle (an R range operation signal), a parking instruction operation signal to the shift lever of the vehicle (a P range operation signal), an operation signal regarding opening/closing of a door of the vehicle (a door operation signal), an operation signal regarding opening/closing of a window of the vehicle (a window operation signal), an operation signal to a console box of the vehicle (a console box operation signal), an operation signal to a glove compartment of the vehicle (a glove compartment operation signal), and a case of a signal regarding presence or absence of sitting of a human body on the seat 10 when the signal indicates that no one is sitting (a sitting-absent signal).

Each of the various operation signals described above is detected by a detection sensor (a mechanical switch sensor, a contact sensor, etc.) provided on the blinker, the instrument panel, the vehicle-mounted device, the brake system, the shift lever, the door, the window, and the box, etc. and is obtained by the vehicle signal output unit 6. The signal regarding presence or absence of sitting is detected by a pressure sensor (a membrane sensor) embedded in, for example, the sitting portion 11 of the seat 10, or by a person-sensing sensor such as an infrared sensor having a directivity to the seat 10, etc. and is obtained by the vehicle signal output unit 6.

These specific signals are such signals as indicating a situation that would give an influence to the steering of the vehicle by the occupant 21 especially when the headrest 13 is under a position adjusting operation, or such signals as indicating a sudden posture change or a slight movement of the occupant 21. Hence, when the vehicle signal indicates any of these specific signals, the arithmetic circuit 5 outputs to the motor control circuit 4, a calculation result for suspending a position adjusting operation for the headrest 13 for a predetermined time to delay a responding movement (a following movement) of the headrest 13.

Therefore, in a normal position adjusting operation, the headrest position adjusting device can adjust the position of the headrest 13 to an appropriate position for the head 22, while when a specific signal comes, because in this case the headrest position adjusting device suspends the position adjusting operation for the headrest 13 for a predetermined time, the device can likewise adjust the position of the headrest 13 accurately by preventing an unnecessary movement of the headrest 13.

Specifically, the headrest position adjusting device can avoid a situation that, for example, when the occupant 21 moves his/her head 22 by turning his/her face to the left or the right for giving a left/right turn operation by operating the blinker, even though the occupant 21 returns his/her head 22 to its original position within a predetermined time, the movement of the head 22 causes the headrest 13 to be moved close to the face or the head 22 of the occupant 21, to bring a driver-unfriendly dangerous condition.

Further, the headrest position adjusting device can avoid a situation that, for example, when the occupant 21 moves his/her face (or head 22) forward for giving an operation to the instrument panel, even though the occupant 21 returns his/her head 22 to its original position after this, the movement of the head 22 causes the headrest 13 to be moved and collide against the head 22. Furthermore, the headrest position adjusting device can avoid a risk that while the vehicle is parked, the headrest 13 might cause a following movement to catch up with a movement of the head 22 of the occupant 21, giving discomfort to the occupant 21.

Further, the headrest position adjusting device can avoid a situation that, for example, when the occupant 21 applies the brake letting his/her head 22 move forward, even though the head 22 returns to its original position after this, the movement of the head 22 causes the headrest 13 to collide against the occipital region of the head 22 to endanger the occupant 21. Furthermore, the headrest position adjusting device can avoid a situation that, for example, when the occupant 21 turns his/her face (or head 22) to the back for driving the vehicle in reverse or when the occupant 21 returns his/her head 22 backward after he/she parks the vehicle, the movement of the head 22 causes the headrest 13 to be moved to come within the occupant's vision to become an obstacle or to come near the occupant 21 to bother driving, to endanger the occupant 21.

Yet further, the headrest position adjusting device can avoid a situation that, for example, when the occupant 21 gets on/off the vehicle by an operation for opening and closing a door or gives an operation for opening or closing a window, or when the occupant 21 falls greatly out of the driving or sitting position (for example, when the occupant 21 leaves the seat 10), such movements cause the headrest 13 to be moved to an unpredictable position to endanger the occupant 21.

Other than those, the headrest position adjusting device can avoid unnecessary power consumption which might occur if the headrest 13 makes an unnecessary movement when, for example, the vehicle is parked, as described above. Moreover, the headrest position adjusting device can avoid a situation that, when the head 22 deviates sideward or moves forward when the occupant 21 opens or closes the console box or the glove compartment, even though the head 22 returns to its original position after this, the movement of the head 22 causes the headrest 13 to collide against the head 22 to endanger or discomfort the occupant 21.

It is preferable to suspend the position adjusting operation (a following movement) of the headrest 13 for a predetermined time also when, for example, the occupant 21 makes such a movement as picking up a thing from around the seat 10 to let his/her sitting posture (particularly, the position of the head 22) fall out greatly from the normal sitting position. For this purpose, the headrest position adjusting device may be configured to suspend the position adjusting operation for the headrest 13 for a predetermined time not only when the vehicle signal is a specific signal but also when the amount of change (ΔC), per a predetermined time, of the capacitance sensed by the sensing electrode 1 is larger than a preset certain threshold (Δth/Δt) (i.e., when the signal indicates that the change is sharp).

The headrest position adjusting device has the vehicle signal output unit 6 constituted by an existing ECU or the like, and is capable of effecting position adjustment and movement suspension by obtaining a capacitance value from a capacitance-type sensor including the sensing electrode 1. This means that the headrest position adjusting device has a simple configuration and is cost-saving, and can perform position adjustment for the headrest 13 automatically by preventing an unnecessary movement of the headrest 13 to suppress unnecessary power consumption.

A position adjusting process realized when the headrest position adjusting device configured as described above executes the headrest position adjusting method according to the present invention is executed as follows, for example. That is, as shown in Fig. 3, first, with the ignition switch of the vehicle functioning as a trigger for judging whether or not to start the position adjusting process, the headrest position adjusting device judges whether the ignition switch is electrically ON or not (step S101), and starts the position adjusting process when the ignition switch has become electrically ON. Specifically, the headrest position adjusting device judges whether or not the ignition switch has become electrically ON by being switched from an OFF state to any of accessory, ON, and start states.

The headrest position adjusting device waits until the ignition switch becomes ON (step S101; No). When the ignition switch becomes ON (step S101; Yes), the detecting circuit 2 detects a capacitance value based on a capacitance from the sensing electrode 1 (step S102).

Then, based on the capacitance value from the detecting circuit 2, the arithmetic circuit 5 calculates the distance between the head 22 of the occupant 21 and the headrest 13 and the amount of change of the capacitance, so that the headrest position adjusting device may perform a position adjusting operation for the headrest 13 may be performed (step S103). After this, the headrest position adjusting device judges whether or not any specific vehicle signal is included among vehicle signals which the signal input unit 99 has received from the vehicle signal output unit 6 (step S104), and suspends the position adjusting operation for the headrest 13 (step S105) when it is judged that a specific vehicle signal is included (step S104; Yes).

When it is judged that no specific vehicle signal is included (step S104; No), the headrest position adjusting device judges whether or not the ignition switch is OFF (step S109). The headrest position adjusting device terminates the series of position adjusting process according to the present flowchart when it is judged that the ignition switch is OFF (step S109; Yes), but jumps to step S102 described above and repeats the subsequent process when it is judged that the ignition switch is not OFF (step S109; No).

When the position adjusting operation is stopped (step S105), the headrest position adjusting device judges whether or not the capacitance value is equal to or smaller than a certain threshold (step S106). When it is judged that the capacitance value is equal to or smaller than a certain threshold (step S106; Yes), the headrest position adjusting device judges whether or not a predetermined time has passed (step S107). When it is judged that the predetermined time has not passed (step S107; No), the headrest position adjusting device goes to step S106 described above.

When it is judged that the predetermined time has passed (step S107; Yes) and when it is judged that the capacitance value is larger than the certain threshold (step S106; No), the headrest position adjusting device resumes the position adjusting operation for the headrest 13 (step S108), and goes to a process for judging whether or not the ignition switch is OFF (step S109). In order to suppress power consumption, it is possible to dispense with the arithmetic process of step S103 described above, when no capacitance value is output by the detecting circuit 2.

By this position adjustment scheme, the headrest position adjusting device having a simple configuration can suppress unnecessary power consumption by preventing an unnecessary movement of particularly the headrest 13, and can automatically adjust the position of the headrest 13 accurately while giving no uncomfortable influence to the occupant 21 and avoiding endangering situations.

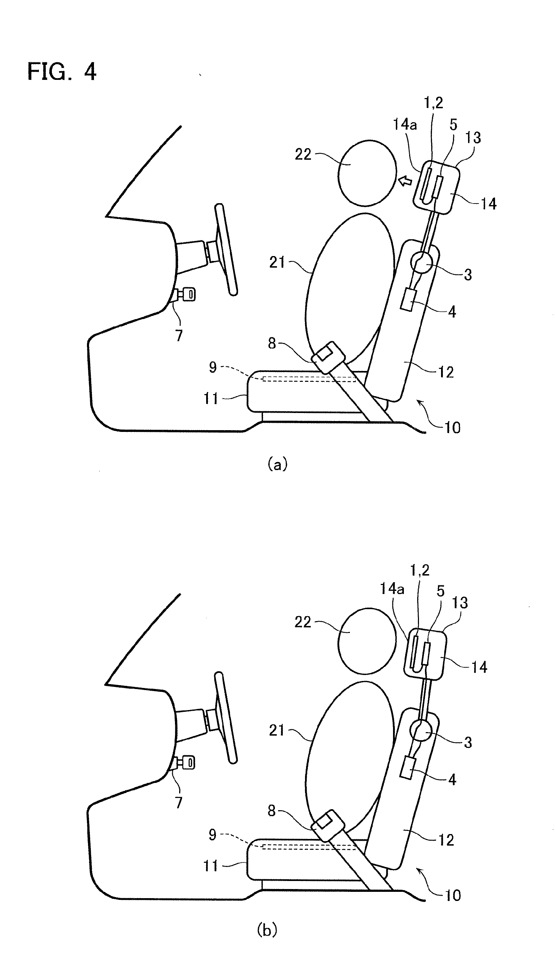

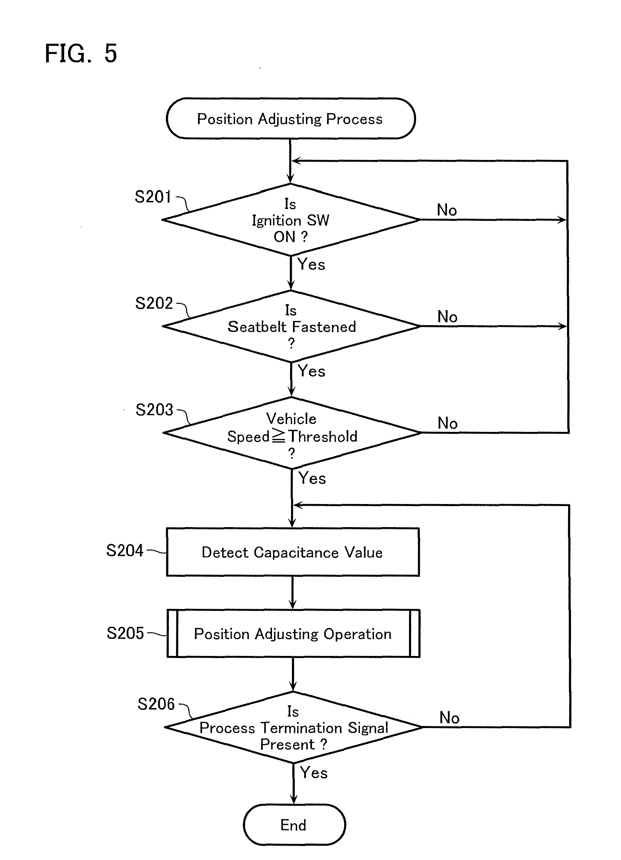

Figs. 4 are exemplary diagrams showing a vehicle seat to which a headrest position adjusting device according to a second embodiment of the present invention is applied. Fig. 5 is a flowchart showing an example of procedures of a position adjusting process by a headrest position adjusting method according to the second embodiment of the present invention.

As shown in Figs. 4(a) and 4(b), the seat 10 is a seat mounted on an unillustrated vehicle, and includes a sitting portion 11 on which an occupant 21 sits, a seat back 12 which stands up from the rear surface of the sitting portion 11 to support the back of the occupant 21, and a headrest 13 provided at the top end of the seat back 12.

A headrest driving motor 3 for moving the headrest 13 is embedded in the top end portion of the seat back 12. The headrest 13 is driven by the headrest driving motor 3 to come close to the head 22 of the occupant 21 (in the direction of the outline arrow shown in Fig. 4(a)), or go away therefrom.

The headrest 13 of the seat 10 may be configured to be driven by the headrest driving motor 3 to move not only in the directions to come close to or go away from the head 22 of the occupant 21 as described above but also in the up-down direction and the left-right direction to follow movements of the head 22 in the up-down direction and the left-right direction, though not so illustrated.

The headrest 13 includes: a headrest main body 14 made of a shock-absorbing material (a cushion material) such as urethane, etc. and capable of receiving the head 22 of the occupant 21 on its head abutting surface (or front surface) 14a; a sensing electrode 1 and a detecting circuit 2 which are mounted inside the headrest main body 14 at a portion close to the head abutting surface 14a; a signal input unit 99 which receives a vehicle signal from such a vehicle signal output unit 6 as shown in Fig. 2; and an arithmetic circuit 5 which, based on an output from the detecting circuit 2 and a signal from the signal input unit 6, executes such processes as judging the content of a vehicle signal, calculating the distance between the head 22 and the headrest 13 and an amount of change of a capacitance, etc.

Information regarding a calculation result of the arithmetic circuit 5 is output to, for example, a motor control circuit 4 embedded in the seat back 12, and the motor control circuit 4 controls the behavior of the headrest driving motor 3 based on the information regarding the calculation result input thereto. In the present example, the arithmetic circuit 5, the motor control circuit 4, and the headrest driving motor 3 constitute position adjusting means which adjusts the position of the headrest 13 by moving the headrest 13 to an appropriate position.

The sensing electrode 1 and the detecting circuit 2 are formed on the same surface or different surfaces of one substrate unillustrated which is made of, for example, a flexible printed board, a membrane substrate, a rigid printed board, etc. The sensing electrode 1 is made of a conductive material such as copper, a copper alloy, aluminum, etc. which is patterned on the substrate made of an insulating material such as polyethylene terephthalate (PET), polyethylene naphthalate (PEN), polyamide (PA), polyimide (PI), a glass epoxy resin, etc. At least one sensing electrode 1 is provided in the headrest 13.

In the present example, the arithmetic circuit 5 has been explained as an example that is configured separately from the sensing electrode 1 and the detecting circuit 2. However, the arithmetic circuit 5 may also be provided on the same substrate on which the sensing electrode 1 and the detecting circuit 2 are formed. Likewise, the motor control circuit 4 may be embedded in the headrest 13 and provided on the same substrate.

In the headrest position adjusting device configured as described above, the sensing electrode 1 embedded in the headrest 13 senses a capacitance between the head 22 of the occupant 21 and the headrest 13 as shown in Fig. 2. A signal indicating the capacitance sensed by the sensing electrode 1 is input to the detecting circuit 2, which then converts the signal to a voltage value and outputs it as a capacitance value.

The arithmetic circuit 5 calculates the distance between the head 22 and the headrest 13 and an amount of change of the capacitance based on the capacitance value output by the detecting circuit 2, and in a position adjusting operation, outputs to the motor control circuit 4, a calculation result which will make the distance between the head 22 and the headrest 13 fixed (i.e., make the capacitance between the head 22 and the headrest 13 a fixed value). In accordance with this calculation result, the motor control circuit 4 outputs a control signal for controlling the driving of the headrest driving motor 3 to the headrest driving motor 3.

The arithmetic circuit 5 receives a vehicle signal input to the signal input unit 99 from the vehicle signal output unit 6, judges the content of the vehicle signal, and when the vehicle signal satisfies a position adjusting operation start condition, starts a position adjusting operation, whereas when the vehicle signal does not satisfy the condition, outputs a calculation result for stopping the headrest 13 to the motor control circuit 4. The vehicle signal output unit 6 outputs to the signal input unit 99, a vehicle signal that is output from a vehicle-mounted device directly, or via an ECU, or via a communication unit, etc. The signal input unit 99 receives the vehicle signal (an electric signal, a frequency signal, etc.) from the vehicle signal output unit 6, converts it to a form processable by the arithmetic circuit 5, and then outputs the vehicle signal to the arithmetic circuit 5.

In the present example, the detecting circuit 2 includes a C-V converting circuit (a capacitance-voltage converting circuit), an A/D converting circuit, etc., and the arithmetic circuit 5 and the motor control circuit 4 include a CPU, a RAM, a ROM, etc. The vehicle signal output unit 6 comprises an ECU (electronic control unit), and outputs the following vehicle signals to the arithmetic circuit 5.

That is, the vehicle signals include at least a vehicle speed signal regarding the speed of the vehicle sent from a vehicle speed sensor (unillustrated), and other than this, specifically, a signal regarding an ignition switch 7 of the vehicle, a signal indicating fastening or unfastening of a seatbelt sent from a buckle switch 8 of a seatbelt buckle of the seat 10, and a signal indicating presence or absence of sitting on the seat 10 sent from a sitting sensor 9 embedded in the sitting portion 11 of the seat 10. When the seat 10 is a driver seat, the sitting sensor 9 needs not be provided. The ignition switch 7, the buckle switch 8, and the sitting sensor 9 can be formed of a known mechanical switch, a known membrane circuit, etc., and hence explanation about them will not be provided here.

These vehicle signals are signals necessary for judging whether to start a position adjusting operation for the headrest 13 in particular. The arithmetic circuit 5 outputs a calculation result for starting a position adjusting operation when the content of a vehicle signal satisfies a position adjusting operation start condition, and a calculation result for prohibiting starting a position adjusting operation for the headrest 13 when the content of the vehicle signal does not satisfy the condition.

Hence, when the position adjusting operation start condition is satisfied, the headrest position adjusting device can perform position adjustment to adjust the headrest 13 to an appropriate position for the head 22, while when the position adjusting operation start condition is not satisfied, because in this case the device does not start a position adjusting operation for the headrest 13, the device can prevent an unnecessary movement of the headrest 13 and automatically adjust the position of the headrest 13 accurately.

Specifically, for example, even when the occupant 21 sits on the seat 10 on the driver side, the headrest position adjusting device does not start a position adjusting operation for the headrest 13 unless at least the vehicle has come to move forward at a certain speed (for example, 0 km/h) or higher. Therefore, the headrest position adjusting device can prevent an unnecessary movement of the headrest 13 and suppress unnecessary power consumption.

Furthermore, other than the vehicle signal regarding the speed, the headrest position adjusting device does not start a position adjusting operation unless, for example, the ignition switch 7 notifies that it is ON and the buckle switch 8 of the seatbelt buckle notifies that the seatbelt is fastened. When the seat 10 is other than the driver seat (for example, when it is a front passenger seat, etc.), the headrest position adjusting device does not start a position adjusting operation unless the sitting sensor 9 notifies presence of sitting.

Yet further, the headrest position adjusting device may be configured not to start a position adjusting operation when, for example, the amount of change of the capacitance from the detecting circuit 2 per a predetermined time is larger than a certain threshold, meaning that the head 22 of the occupant 21 sitting on the seat 10 is making a large movement.

The headrest position adjusting device has the vehicle signal output unit 6 constituted by an existing ECU or the like, can likewise use existing switches as the ignition switch 7, etc., and is capable of effecting a start of a position adjusting operation, etc. by obtaining a capacitance value from a capacitance-type sensor including the sensing electrode 1. This means that the headrest position adjusting device has a simple configuration and is cost-saving, and can perform position adjustment for the headrest 13 automatically by preventing an unnecessary movement of the headrest 13 to suppress unnecessary power consumption.

A position adjusting process realized when the headrest position adjusting device configured as described above executes the headrest position adjusting method according to the present invention is executed as follows, for example. That is, as shown in Fig. 5, first, the headrest position adjusting device judges whether or not the ignition switch 7 of the vehicle has become electrically ON as triggered by the ignition switch being turned to a standby state (e.g., a key is inserted into the ignition switch 7), an accessory state, or an ON state (step S201).

The headrest position adjusting device waits until the ignition switch becomes ON (step S201; No). When it is judged that the ignition switch has become ON (step S201; Yes), the headrest position adjusting device judges whether or not the seatbelt is fastened based on a signal from the seatbelt buckle switch 8 indicating fastening/unfastening of the seatbelt (step S202).

When it is judged that the seatbelt is fastened (step S202; Yes), the headrest position adjusting device judges whether or not the vehicle is moving forward at a speed that is equal to or higher than a certain threshold (step S203). When it is judged that the vehicle is moving forward at a speed equal to or higher than the certain threshold (step S203; Yes), the detecting circuit 2 detects a capacitance value (step S204), and based on the capacitance value, the arithmetic circuit 5 calculates the distance between the head 22 of the occupant 21 and the headrest 13 and an amount of change of the capacitance, so that the headrest position adjusting device may perform a position adjusting operation for the headrest 13 based on the calculation results (step S205).

In order to suppress power consumption, it is possible to dispense with the arithmetic process of step S205 described above, when no capacitance value is output by the detecting circuit 2.

After a position adjusting operation for the headrest 13 is performed (step S205), the headrest position adjusting device judges presence or absence of a process termination signal such as the ignition switch being turned OFF, etc., indicating that the headrest position adjusting process is to be terminated (step S206). When it is judged that a process termination signal is present (step S206; Yes), the headrest position adjusting device terminates the series of position adjusting process according to the present flowchart. When it is judged that a process termination signal is absent (step S206; No), the headrest position adjusting device jumps to step S204 described above and repeats the subsequent process.

On the other hand, when it is judged at step S202 described above that the seatbelt is not fastened (step S202; No), and when it is judged at step S203 described above that the vehicle is not moving forward at a speed equal to or higher than the certain threshold (step S203; No), the headrest position adjusting device goes to step S201 and does not start a position adjusting operation for the headrest 13.

By this position adjustment process, the headrest position adjusting device having a simple configuration can automatically adjust the position of the headrest 13 accurately while suppressing unnecessary power consumption by preventing an unnecessary movement of particularly the headrest 13, and can suppress unnecessary power consumption as much as possible by preventing an unnecessary movement of the headrest 13. When the seat 10 is other than the driver seat, the headrest position adjusting device may further perform a process of judging presence or absence of sitting, based on a signal from the sitting sensor 9 regarding presence or absence of sitting.

### Industrial Applicability

As described above, the headrest position adjusting device and the headrest position adjusting method according to the present invention are useful for position adjustment of a vehicle headrest, and particularly suitable for position adjustment of a headrest of a seat of an automobile.

### Description of Reference Numerals

- 1: sensing electrode
- 2: detecting circuit
- 3: headrest driving motor
- 4: motor control circuit
- 5: arithmetic circuit
- 6: vehicle signal output unit
- 7: ignition switch
- 8: buckle switch
- 9: sitting sensor
- 10: seat
- 11: sitting portion
- 12: seat back (backrest)
- 13: headrest
- 14: headrest main body
- 14a: head abutting surface (front surface)
- 21: occupant
- 22: head
- 99: signal input unit

## Claims

1. A headrest position adjusting device, comprising:
at least one sensing electrode provided in a headrest provided on a seat of a vehicle for sensing a capacitance between a head of a human body sitting on the seat and the headrest;
a detecting circuit which detects a capacitance value based on the capacitance from the sensing electrode;
vehicle signal output means which outputs a vehicle signal regarding at least one of an operation to the vehicle and a state of the seat; and
position adjusting means which receives the vehicle signal output by the vehicle signal output means, calculates a distance between the head and the headrest and an amount of change of the capacitance based on the capacitance value detected by the detecting circuit, and in accordance with calculation results, adjusts a position of the headrest by moving the headrest to an appropriate position based on the distance and a position of the head,
wherein the position adjusting means suspends a position adjusting operation for the headrest for a predetermined time, when one of the following cases occurs: a case when the vehicle signal output by the vehicle signal output means is a specific signal indicating a specific state; and a case when the vehicle signal indicates that the amount of change, per a predetermined time, of the capacitance from the detecting circuit is larger than a certain threshold.

2. The headrest position adjusting device according to claim 1,
wherein when one of the cases for suspending the position adjusting operation for the headrest for the predetermined time occurs, after the predetermined time has passed, the position adjusting means resumes the position adjusting operation for the headrest in accordance with the calculation results.

3. The headrest position adjusting device according to claim 1 or claim 2, wherein the specific signal is any one of an instruction operation signal regarding a left or right turn of the vehicle, an operation signal to an instrument panel of the vehicle, an operation signal to a vehicle-mounted device mounted on the vehicle, an instruction operation signal regarding a brake of the vehicle, a reversing instruction operation signal to a shift lever of the vehicle, a parking instruction operation signal to the shift lever of the vehicle, an operation signal regarding opening/closing of a door of the vehicle, an operation signal regarding opening/closing of a window of the vehicle, an operation signal to a console box of the vehicle, an operation signal to a glove compartment of the vehicle, and a signal regarding presence or absence of sitting of a human body on the seat.

4. A headrest position adjusting method for adjusting a position of a headrest provided on a seat of a vehicle by moving the headrest to an appropriate position in accordance with a distance between a head and the headrest and a position of the head based on a capacitance value which is based on a capacitance from at least one sensing electrode provided in the headrest and a vehicle signal regarding at least one of an operation to the vehicle and a state of the seat, the method comprising:
a calculating step of calculating based on the capacitance value, a distance between a head of a human body sitting on the seat and the headrest and an amount of change of the capacitance;
a judging step of judging based on the vehicle signal whether or not the vehicle signal is a specific signal indicating a specific state;
a controlling step of controlling moving of the headrest in accordance with calculation results of the calculating step and a judgment result of the judging step,
wherein the controlling step executes a control of suspending a position adjusting operation for the headrest for a predetermined time, when one of the following cases occurs: a case when the judgment result of the judging step indicates that the vehicle signal is a specific signal; and a case when the calculation result of the calculating step indicates that the amount of change, per a predetermined time, of the capacitance from a detecting circuit is larger than a certain threshold.

5. The headrest position adjusting method according to claim 4,
wherein when one of the cases for suspending the position adjusting operation for the headrest for the predetermined time occurs, after the predetermined time has passed, the controlling step executes a control of resuming the position adjusting operation for the headrest in accordance with the calculation results.

6. The headrest position adjusting method according to claim 4 or 5, wherein the specific signal is any one of an instruction operation signal regarding a left or right turn of the vehicle, an operation signal to an instrument panel of the vehicle, an operation signal to a vehicle-mounted device mounted on the vehicle, an instruction operation signal regarding a brake of the vehicle, a reversing instruction operation signal to a shift lever of the vehicle, a parking instruction operation signal to the shift lever of the vehicle, an operation signal regarding opening/closing of a door of the vehicle, an operation signal regarding opening/closing of a window of the vehicle, an operation signal to a console box of the vehicle, an operation signal to a glove compartment of the vehicle, and a signal regarding presence or absence of sitting of a human body on the seat.

7. A headrest position adjusting device, comprising:
at least one sensing electrode provided in a headrest provided on a seat of a vehicle for sensing a capacitance between a head of a human body sitting on the seat and the headrest;
a detecting circuit which detects a capacitance value based on the capacitance from the sensing electrode;
vehicle signal output means which outputs at least a vehicle speed signal regarding a speed of the vehicle as a vehicle signal; and
position adjusting means which receives the vehicle signal output by the vehicle signal output means, calculates a distance between the head and the headrest and an amount of change of the capacitance based on the capacitance value detected by the detecting circuit, and in accordance with calculation results, adjusts a position of the headrest by moving the headrest to an appropriate position based on the distance and a position of the head,
wherein the position adjusting means starts a position adjusting operation by moving the headrest, when the vehicle signal output by the vehicle signal output means indicates at least that the vehicle has come to move forward at a certain speed or higher.

8. The headrest position adjusting device according to claim 7,
wherein the vehicle signal output means outputs a signal indicating presence or absence of sitting on the seat as the vehicle signal, and
when the seat is other than a driver seat of the vehicle, the position adjusting means starts a position adjusting operation for the headrest on that seat when the vehicle signal additionally indicates that sitting on the seat is present.

9. The headrest position adjusting device according to claim 7 or 8,
wherein the vehicle signal output means outputs a signal regarding an ignition switch of the vehicle and a signal indicating fastening/unfastening of a seatbelt sent from a seatbelt buckle of the seat as the vehicle signal, and
the position adjusting means starts a position adjusting operation for the headrest when the vehicle signal additionally indicates that the ignition switch is ON and that the seatbelt is fastened.

10. The headrest position adjusting device according to any one of claims 7 to 9,
wherein when the amount of change, per a predetermined time, of the capacitance from the detecting circuit is larger than a certain threshold, the position adjusting means does not start a position adjusting operation for the headrest.

11. A headrest position adjusting method for adjusting a position of a headrest provided on a seat of a vehicle by moving the headrest to an appropriate position in accordance with a distance between a head and the headrest and a position of the head based on a capacitance value which is based on a capacitance from at least one sensing electrode provided in the headrest and at least a vehicle speed signal as a vehicle signal regarding a speed of the vehicle, the method comprising:
a calculating step of calculating a distance between a head of a human body sitting on the seat and the headrest and an amount of change of the capacitance;
a vehicle signal receiving step of receiving the vehicle signal; and
a controlling step of controlling moving of the headrest based on calculation results of the calculating step and the vehicle signal received by the vehicle signal receiving step,
wherein the controlling step executes a control of starting a position adjusting operation by moving the headrest, when the vehicle signal received by the vehicle signal receiving step indicates at least that the vehicle has come to move forward at a certain speed or higher.

12. The headrest position adjusting method according to claim 11, wherein the vehicle signal receiving step receives a signal indicating presence or absence of sitting on the seat as the vehicle signal, and
when the seat is other than a driver seat of the vehicle, the controlling step executes a control of starting a position adjusting operation for the headrest on that seat when the vehicle signal additionally indicates that sitting on the seat is present.

13. The headrest position adjusting method according to claim 11 or 12, wherein the vehicle signal receiving step receives a signal regarding an ignition switch of the vehicle and a signal indicating fastening/unfastening of a seatbelt sent from a seatbelt buckle of the seat as the vehicle signal, and
the controlling step executes a control of starting a position adjusting operation for the headrest when the vehicle signal additionally indicates that the ignition switch is ON and that the seatbelt is fastened.

14. The headrest position adjusting method according to any one of claims 11 to 13,
wherein the controlling step executes a control of refraining from starting a position adjusting operation for the headrest when the calculation result indicates that the amount of change, per a predetermined time, of the capacitance from a detecting circuit is larger than a certain threshold.
